# EUROPEAN PATENT SPECIFICATION

(11) **EP 2 500 263 B1**
(45) Date of publication and mention of the grant of the patent: **22.01.2020**
(21) Application number: 12159600.1
(22) Date of filing: 15.03.2012
(51) Int. Cl.: B64C 11/24

(54) **Improved retention for bonded hollow fan blade cover**
Verbesserte Rückhaltung für geklebte hohle Ventilatorschaufelabdeckung
Meilleure rétention de couverture de pale de ventilateur creuse

(30) Priority: 17.03.2011 US 201113050275
(43) Date of publication of application: 19.09.2012
(73) Proprietor: United Technologies Corporation, Farmington, CT 06032 (US)
(72) Inventor: Weisse, Michael A., Tolland, CT Connecticut 06084 (US)
(74) Representative: Dehns

(56) References cited:
- EP-A2- 1 780 120
- EP-A2- 1 983 160
- WO-A1-98/46421
- WO-A1-2005/098241
- US-A- 2 954 208
- US-A- 5 498 137
- US-A1- 2003 069 321
- US-A1- 2010 322 760

## Description

### BACKGROUND

This invention relates to improvements in fan blades adapted primarily for use in aviation service.

It is well known that fan blades may be hollow and have stiffening ribs disposed therein. The ribs are typically welded to one plate or the other, or to a propeller shaft.

A two-part fan blade having the features of the preamble of claim 1 is disclosed in US 2003/0069321 A1. Multi-part airfoil constructions are disclosed in US 2010/0322760 A1, US 2 954 208 A, US 5498137 A and EP 1983160 A1. Multi-part wing constructions are disclosed in EP 1780120 A2 and WO 98/46421 A.

### SUMMARY

According to the invention there is provided a two part fan blade as set forth in claim 1.

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 shows a prior art reinforcing rib of a fan blade attached to a cover of a fan blade.
Figure 2 shows an embodiment of a reinforcing rib of a fan blade attached to a cover of a fan blade.
Figure 3 shows a fan blade incorporating the ribs of Figure 2.
Figure 4 shows a top view of the fan blade of Figure 3.

### DETAILED DESCRIPTION OF THE PREFERRED EMBODIMENT

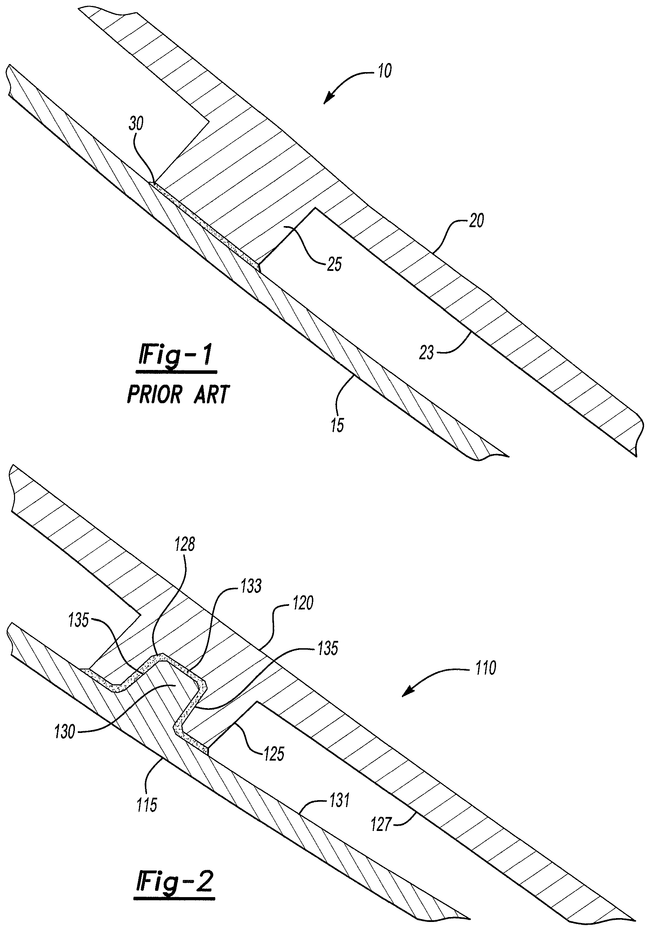

Referring to Figure 1, a view of a prior art two-part airfoil 10 is shown. The airfoil 10 has a suction side cover 15 and a pressure side 20. The suction side cover 15 is attached to a rib 25 depending from an inside 23 of the pressure side 20. The rib is attached to the suction side cover 15 by a bond 30 such as glue, welding or the like.

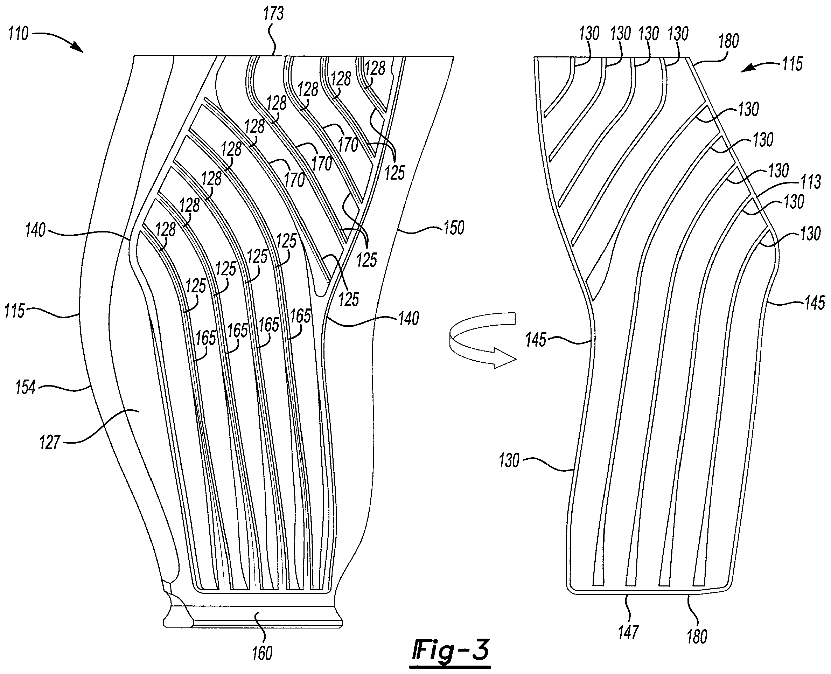

Referring now to Figures 2 and 3, a fan blade 110 is shown. The fan blade 110 has a suction side cover 115 and a pressure side 120. The pressure side 120 has an inner surface 127 from which ribs 125 extend towards the suction side cover 115. The ribs 125 have a longitudinal groove 128 formed therein. The suction side cover 115 has plurality of riblets 130 extending from an inner surface 131 thereof towards the pressure side 120. The groove may be machined or cast or forged into the ribs 125. Though the groove 128 is shown with a rectangular contour and the riblets 130 also have a rectangular contour, other mating riblet 130 contours and groove 128 contours are contemplated herein providing such other contours provide increased gluing area and less motion between a riblet 130 and the groove 128.

A glue 133, such as an epoxy or a urethane, may be used to join the ribs 125 and the riblets 130 together within the groove 128. One can see that, by joining the ribs 125 and the riblets 130 together within the groove 128, the amount of glue 133 used to join the suction side cover 115 and the pressure side 120 is increased by the amount of glue 133 placed on the sides 135 of the riblet, as compared to the prior art. The added glue 133 provides a concomitantly stronger bond between the suction side cover 115 and the suction side 120. If a urethane glue is used, the urethane glue may provide damping between the suction side cover 115 and the pressure side 120

Moreover, by placing the riblet 130 within the groove 128, the effect of operative forces, which may cause shear and tearing motion between the suction side cover 115 and the pressure side 120, are minimized because of a mechanical bond between the ribs 125 and the riblets 130 as the suction side cover 115 and pressure side 120 react to operation within an airstream. This mechanical advantage minimizes the effect of tear and shear force affecting suction side cover 115 and pressure side 120 of the fan blade 110.

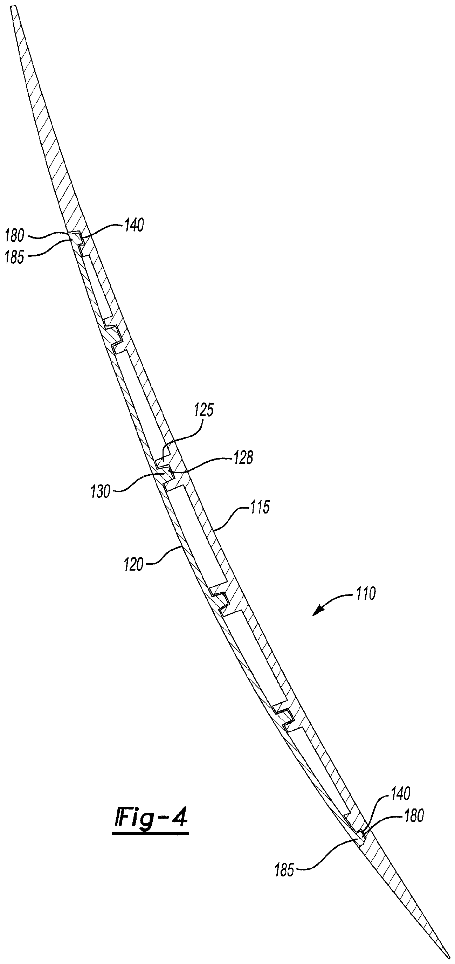

Referring now to Figures 3 and 4, an interior view of the suction side cover 115 and the pressure side 120 are shown. The inner surface 127 of the pressure side has an trench 140 (see Fig. 4) that approximates the sides 145 and the bottom 147 of the elbow-shape of the suction side cover 115. The trench is spaced from the leading edge 154 and the trailing edge 150 and the base 160 of the fan blade 110. The pressure side 115 has a first plurality 165 of ribs 125 extending from the trench 140 near the base 160 to the trench 140 adjacent the leading edge 154 of the trench and a second plurality 170 of ribs 125 extending from the trench 140 near the trailing edge 150 to the trench 140 near the leading edge 154.

The suction side cover 115 has a set of corresponding riblets 130 that fit within the grooves of the first plurality 165 of ribs 125 and the second plurality 170 of ribs 125. The second plurality of ribs 170 extend from near the trailing 150 to near the leading edge 154 or towards the blade tip 173. The suction side cover 115 has a bead 180 extending along its outside edge 185 that mates with the trench 140.

To construct the airfoil, glue 133 is placed in the grooves 128 in the ribs 125 and the trench 140 and the riblets 130 are pressed into the grooves 128 and the bead 180 is pressed into the trench 140.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments. For instance, the riblets 130 may extend from the pressure side 115 and the ribs 125 may extend from the cover 120.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A two part fan blade (110) comprising:
a suction side (115), and
a pressure side (120); wherein
said pressure side (120) has one of a rib (125) or a riblet (130), said rib (125) or riblet (130) extending from said pressure side (120) in a direction towards said suction side and being formed integrally with said pressure side;
**characterised in that**:
said suction side (115) has the other of said rib (125) or riblet (130), said other of said rib (125) or riblet (130) extending from said suction side (115) in a direction towards said pressure side and being formed integrally with said suction side;
said rib (125) has a groove (128) therein; and
said riblet (130) fits within said groove (128).

2. The two part fan blade of claim 1 further comprising:
a glue (135) disposed between said rib (125) and said riblet (130).

3. The two part fan blade of claim 2 wherein said glue (135) is a urethane glue.

4. The two part fan blade of any preceding claim wherein said groove (128) is longitudinal.

5. The two part fan blade of any preceding claim wherein one of said suction side (115) and said pressure side (120) has a trench (140) adjacent an outer profile thereof and wherein the other of said suction side (115) and said pressure side (120) has a bead (180) that fits in said trench (140).

6. The two part fan blade of claim 5 wherein said trench (140) is adjacent a leading edge (154) and a base (160) of said fan blade (110).

7. The two part fan blade of claim 6 wherein a rib (130) extends from said trench (140) adjacent a base of said fan blade to said trench adjacent a leading edge of said airfoil.

8. The two part fan blade of claim 5, 6 or 7 wherein said trench (140) is adjacent a leading edge (154) and a trailing edge (150) of said fan blade (110).

9. The two part fan blade of claim 8 wherein a rib (130) extends from said trench (140) adjacent said leading edge (154) to said trench (140) adjacent said trailing edge (150).

10. The two part fan blade of any of claims 5 to 9 wherein said trench (140) is in said pressure side (120).

11. The two part fan blade of any preceding claim wherein said rib (130) extends from said pressure side (120) or wherein said riblet (130) extends from said suction side (115).

12. The two-part fan blade of any preceding claim wherein:
said groove (128) has a first contour, and
said riblet (130) has a second contour fitting within said first contour of said groove (128).

13. The two-part fan blade of claim 11 wherein said first contour and said second contour mate.

14. The two-part fan blade of claim 12 or 13 wherein said first contour and said second contour are rectangular.

## Patentansprüche

1. Zweiteilige Ventilatorschaufel (110), umfassend:
eine Saugseite (115), und
eine Druckseite (120); wobei
die Druckseite (120) eines von einer Rippe (125) oder einem Riblet (130) aufweist, wobei sich die Rippe (125) oder das Riblet (130) von der Druckseite (120) in einer Richtung zu der Saugseite erstreckt und einstückig mit der Druckseite gebildet ist;
**dadurch gekennzeichnet, dass**:
die Saugseite (115) das andere von der Rippe (125) oder dem Riblet (130) aufweist, wobei sich das andere von der Rippe (125) oder dem Riblet (130) von der Saugseite (115) in einer Richtung zu der Druckseite erstreckt und einstückig mit der Saugseite gebildet ist;
die Rippe (125) eine Nut (128) darin aufweist; und
das Riblet (130) in die Nut (128) passt.

2. Zweiteilige Ventilatorschaufel nach Anspruch 1, ferner umfassend:
einen Klebstoff (135), der zwischen der Rippe (125) und dem Riblet (130) angeordnet ist.

3. Zweiteilige Ventilatorschaufel nach Anspruch 2, wobei der Klebstoff (135) ein Urethan-Klebstoff ist.

4. Zweiteilige Ventilatorschaufel nach einem vorhergehenden Anspruch, wobei die Nut (128) länglich ist.

5. Zweiteilige Ventilatorschaufel nach einem vorhergehenden Anspruch, wobei eine von der Saugseite (115) und der Druckseite (120) eine Rille (140) benachbart zu einem Außenprofil davon aufweist und wobei die andere von der Saugseite (115) und der Druckseite (120) eine Sicke (180) aufweist, die in die Rille (140) passt.

6. Zweiteilige Ventilatorschaufel nach Anspruch 5, wobei die Rille (140) benachbart zu einer Vorderkante (154) und einer Basis (160) der Ventilatorschaufel (110) ist.

7. Zweiteilige Ventilatorschaufel nach Anspruch 6, wobei sich eine Rippe (130) von der Rille (140) benachbart zu einer Basis der Ventilatorschaufel zu der Rille benachbart zu einer Vorderkante des Schaufelprofils erstreckt.

8. Zweiteilige Ventilatorschaufel nach Anspruch 5, 6 oder 7, wobei die Rille (140) benachbart zu einer Vorderkante (154) und einer Hinterkante (150) der Ventilatorschaufel (110) ist.

9. Zweiteilige Ventilatorschaufel nach Anspruch 8, wobei sich eine Rippe (130) von der Rille (140) benachbart zu der Vorderkante (154) zu der Rille (140) benachbart zu der Hinterkante (150) erstreckt.

10. Zweiteilige Ventilatorschaufel nach einem der Ansprüche 5 bis 9, wobei sich die Rille (140) in der Druckseite (120) befindet.

11. Zweiteilige Ventilatorschaufel nach einem vorhergehenden Anspruch, wobei sich die Rippe (130) von der Druckseite (120) erstreckt oder wobei sich das Riblet (130) von der Saugseite (115) erstreckt.

12. Zweiteilige Ventilatorschaufel nach einem vorhergehenden Anspruch, wobei:
die Nut (128) eine erste Kontur aufweist, und
das Riblet (130) eine zweite Kontur aufweist, die in die erste Kontur der Nut (128) passt.

13. Zweiteilige Ventilatorschaufel nach Anspruch 11, wobei die erste Kontur und die zweite Kontur zusammenpassen.

14. Zweiteilige Ventilatorschaufel nach Anspruch 12 oder 13, wobei die erste Kontur und die zweite Kontur rechteckig sind.

## Revendications

1. Pale de soufflante en deux parties (110), comprenant :
un extrados (115), et
un intrados (120) ; dans laquelle
ledit intrados (120) possède au moins une nervure (125) ou une petite nervure (130), ladite nervure (125) ou ladite petite nervure (130) s'étendant depuis ledit intrados (120) en direction dudit extrados et étant formée d'un seul tenant avec ledit intrados ;
**caractérisée en ce que** :
ledit extrados (115) possède l'autre de ladite nervure (125) ou de ladite petite nervure (130), ladite autre de ladite nervure (125) ou de ladite petite nervure (130) s'étendant dudit extrados (115) en direction dudit intrados et étant formée d'un seul tenant avec ledit extrados ;
ladite nervure (125) possède une rainure (128) à l'intérieur ; et
ladite petite nervure (130) s'emboîte à l'intérieur de ladite rainure (128).

2. Pale de soufflante en deux parties selon la revendication 1, comprenant en outre :
une colle (135) disposée entre ladite nervure (125) et ladite petite nervure (130).

3. Pale de soufflante en deux parties selon la revendication 2, dans laquelle ladite colle (135) est une colle uréthane.

4. Pale de soufflante en deux parties selon l'une quelconque des revendications précédentes, dans laquelle ladite rainure (128) est longitudinale.

5. Pale de soufflante en deux parties selon l'une quelconque des revendications précédentes, dans laquelle l'un dudit extrados (115) et dudit intrados (120) comporte un sillon (140) adjacent à un profil externe de celui-ci et dans laquelle l'autre dudit extrados (115) et dudit intrados (120) comporte une moulure convexe (180) qui s'emboîte dans ledit sillon (140) .

6. Pale de soufflante en deux parties selon la revendication 5, dans laquelle ledit sillon (140) est adjacent à un bord d'attaque (154) et à une base (160) de ladite pale de soufflante (110).

7. Pale de soufflante en deux parties selon la revendication 6, dans laquelle une nervure (130) s'étend dudit sillon (140) adjacent à une base de ladite pale de soufflante audit sillon adjacent à un bord d'attaque de ladite surface portante.

8. Pale de soufflante en deux parties selon la revendication 5, 6 ou 7, dans laquelle ledit sillon (140) est adjacent à un bord d'attaque (154) et à un bord de fuite (150) de ladite pale de soufflante (110).

9. Pale de soufflante en deux parties selon la revendication 8, dans laquelle une nervure (130) s'étend dudit sillon (140) adjacent audit bord d'attaque (154) audit sillon (140) adjacent audit bord de fuite (150).

10. Pale de soufflante en deux parties selon l'une quelconque des revendications 5 à 9, dans laquelle ledit sillon (140) est dans ledit intrados (120).

11. Pale de soufflante en deux parties selon l'une quelconque des revendications précédentes, dans laquelle ladite nervure (130) s'étend depuis ledit intrados (120) ou dans laquelle ladite petite nervure (130) s'étend depuis ledit extrados (115).

12. Pale de soufflante en deux parties selon l'une quelconque des revendications précédentes, dans laquelle
ladite rainure (128) a un premier contour, et
ladite petite nervure (130) a un second contour s'emboîtant à l'intérieur dudit premier contour de ladite rainure (128).

13. Pale de soufflante en deux parties selon la revendication 11, dans laquelle ledit premier contour et ledit second contour s'accouplent.

14. Pale de soufflante en deux parties selon la revendication 12 ou 13, dans laquelle ledit premier contour et ledit second contour sont rectangulaires.
